# FASCICULE DE BREVET EUROPEEN

(11) **EP 0 646 716 B1**
(45) Date de publication et mention de la délivrance du brevet: **03.06.1998**
(21) Numéro de dépôt: 94402175.7
(22) Date de dépôt: 29.09.1994
(51) Int. Cl.: F02K 1/00

(54) **Tuyère bidimensionnelle orientable**
Schubdüse mit zweidimensionaler Schubvectorsteuerung
Bidimensional vectoriable nozzle

(30) Priorité: 30.09.1993 FR 9311646
(43) Date de publication de la demande: 05.04.1995
(73) Titulaire: SOCIETE NATIONALE D'ETUDE ET DE CONSTRUCTION DE MOTEURS D'AVIATION, "S.N.E.C.M.A.", 75015 Paris (FR)
(72) Inventeur: Saucereau, Didier, F-27120 Pacy-sur-Eure (FR); FOURNIER, Jean-Pierre, F-27630 Ecos (FR)
(74) Mandataire: Thévenet, Jean-Bruno

(56) Documents cités:
- DE-A- 2 363 496
- US-A- 3 080 711
- US-A- 3 094 072
- US-A- 3 130 544
- US-A- 3 558 058

## Description

### Domaine de l'invention

La présente invention concerne le domaine de la propulsion combinée et plus particulièrement celui des véhicules spatiaux utilisant des tuyères bidimensionnelles à corps central, fonctionnant dans les domaines supersonique et hypersonique.

De façon plus spécifique, la présente invention a pour objet une tuyère à détente-déflexion symétrique plane bidimensionnelle à poussée orientable, comprenant des premier et second panneaux latéraux parallèles fixes orientés longitudinalement et dont la partie arrière se termine en forme de pointe, des premier et second panneaux principaux fixes et un corps central définissant avec chacun des premier et second panneaux principaux fixes des premier et second canaux d'écoulement de gaz chauds issus d'une chambre de combustion, des premier et second cols étant formés entre le corps central et les premier et second panneaux principaux fixes, le corps central présentant en aval des premier et second cols une partie convergente se terminant au voisinage desdites pointes des premier et second panneaux latéraux et les premier et second panneaux principaux présentant également chacun en aval des premier et second cols, des parties arrière qui convergent vers le corps central et sont interrompues par des arêtes constituant des premier et second foyers situés en regard de la partie convergente du corps central et en amont desdites pointes des premier et second panneaux latéraux, les gaz brûlés dans la chambre de combustion et s'écoulant à travers les premier et second canaux d'écoulement étant soumis à une détente et à une déflexion par le corps central en aval des arêtes constituant les premier et second foyers.

### Art antérieur

On connaît déjà des tuyères propulsives du type à détente-déflexion.

Les tuyères à corps central peuvent avoir une configuration axisymétrique ou présenter un aspect bidimensionnel. De telles tuyères présentent généralement une géométrie fixe pour un mode donné de fonctionnement et ne participent pas au pilotage.

On connaît par le document US-A-3 080 711 une tuyère bidimensionnelle comportant un élément central déformable en forme de double rampe qui permet de modifier la section de passage au col de la tuyère. Cet élément central se déforme de façon symétrique et modifie de la même manière les sections de passage des deux canaux.

On connaît également des tuyères sans corps central présentant certains éléments de géométrie variable. Pour provoquer une déviation de jet, les tuyères traditionnelles impliquent en général la mise en oeuvre de plusieurs déflecteurs externes ou additionnels.

### Objet et description succincte de l'invention

La présente invention vise à améliorer le fonctionnement des tuyères à détente-déflexion symétriques planes bidimensionnelles et à élargir leur champ d'application.

Ces buts sont atteints grâce à une tuyère à détente-déflexion symétrique plane bidimensionnelle à poussée orientable, comprenant des premier et second panneaux latéraux parallèles fixes orientés longitudinalement et dont la partie arrière se termine en forme de pointe, des premier et second panneaux principaux fixes et un corps central définissant avec chacun des premier et second panneaux principaux fixes des premier et second canaux d'écoulement de gaz chauds issus d'une chambre de combustion, des premier et second cols étant formés entre le corps central et les premier et second panneaux principaux fixes, le corps central présentant en aval des premier et second cols une partie convergente se terminant au voisinage desdites pointes des premier et second panneaux latéraux et les premier et second panneaux principaux présentant également chacun en aval des premier et second cols, des parties arrière qui convergent vers le corps central et sont interrompues par des arêtes constituant des premier et second foyers situés en regard de la partie convergente du corps central et en amont desdites pointes des premier et second panneaux latéraux, les gaz brûlés dans la chambre de combustion et s'écoulant à travers les premier et second canaux d'écoulement étant soumis à une détente et à une déflexion par le corps central en aval des arêtes constituant les premier et second foyers, caractérisée en ce qu'elle comprend en outre un organe formant volet monté en amont du corps central de manière à pouvoir pivoter autour d'un axe perpendiculaire auxdits premier et second panneaux latéraux fixes en faisant varier ainsi en sens opposés les sections de passage des premier et second canaux d'écoulement en amont des premier et second cols, de telle sorte que les débits massiques des écoulements des deux canaux d'écoulement situés de part et d'autre du corps central peuvent être sélectivement modifiés en sens inverse pour créer des composantes de portance différentes.

Selon un premier mode de réalisation possible, le volet présente la forme d'une plaque essentiellement plane.

Dans ce cas, le volet est monté pivotant autour d'un axe situé dans le plan de symétrie de la tuyère qui est parallèle aux panneaux principaux, au voisinage de l'extrémité amont du corps central.

Le volet pivotant est ainsi placé en position neutre dans le plan de symétrie du corps central définissant les deux parties de tuyère et prolonge le corps central vers l'amont. Lorsqu'il pivote par rapport au corps central, le volet peut modifier en sens inverse les sections de passage des canaux d'écoulement de gaz chauds en amont des cols de tuyère.

La différence de débit massique entre les deux écoulements crée des composantes de portance différentes, ce qui permet d'utiliser la tuyère à des fins de pilotage d'un véhicule spatial équipé d'une telle tuyère.

Selon un autre mode de réalisation, le volet est constitué par un corps en forme d'ogive qui constitue la partie amont du corps central et comprend au moins un bras pivotant autour d'un axe situé dans le plan de symétrie de la tuyère qui est paralllèle aux panneaux principaux, au voisinage ou très légèrement en amont de la partie fixe du corps central qui définit les premier et second cols.

Dans ce cas, de façon plus particulière, le volet en forme d'ogive comprend une partie aval constituée par au moins une plaque incurvée qui coulisse dans une glissière constituée par deux plaques incurvées situées dans la partie fixe du corps central au voisinage d'au moins l'un des premier et second cols.

Quel que soit le mode particulier de réalisation, la tuyère selon la présente invention peut comprendre à titre d'exemple des moyens de commande de pivotement du volet qui comprennent une paire de vérins dont le corps est fixé sur l'un des premier et second panneaux latéraux fixes et l'organe d'actionnement agit par l'intermédiaire d'un système à crémaillère sur une roue dentée solidaire dudit volet qui est centrée sur ledit axe de pivotement.

L'invention a également pour objet un véhicule spatial qui comprend au moins une première paire de tuyères à détente-déflexion symétriques planes bidimensionnelles à poussée orientable conformes à l'invention et munies chacune d'un volet pivotant autour d'un axe vertical, et au moins une deuxième paire de tuyères à détente-déflexion symétriques planes bidimensionnelles à poussée orientable conformes à l'invention et munies chacune d'un volet pivotant autour d'un axe horizontal, chacune des première et deuxième paires de tuyères étant disposée symétriquement par rapport à un plan axial médian vertical du véhicule spatial, et des moyens de commande étant prévus de manière à piloter le véhicule spatial en lacet, roulis et tangage par action sur la position angulaire des volets des différentes tuyères.

Les tuyères selon l'invention sont également applicables à un véhicule spatial comprenant des première et deuxième tuyères à détente-déflexion symétriques planes bidimensionnelles à poussée orientable comprenant chacune un volet pivotant autour d'un axe vertical, et disposées symétriquement par rapport à un plan axial médian vertical du véhicule spatial, et une tuyère complémentaire à détente-déflexion symétrique plane bidimensionnelle à poussée orientable comprenant un volet pivotant autour d'un axe horizontal et disposée entre les première et deuxième tuyères également de façon symétrique par rapport au plan axial médian vertical du véhicule spatial, des moyens de commande étant prévus de manière à piloter le véhicule spatial en lacet, roulis et tangage par action sur la position angulaire des volets des différentes tuyères.

### Brève description des dessins

D'autres caractéristiques et avantages de l'invention ressortiront de la description suivante de modes particuliers de réalisation, donnés à titre d'exemples, en référence aux dessins annexés sur lesquels :
la figure 1 est une vue schématique en coupe selon un plan médian vertical d'une tuyère bidimensionnelle à poussée orientable selon l'invention,
la figure 2 est une vue schématique arrière d'un premier exemple d'agencement de plusieurs tuyères bidimensionnelles selon l'invention, applicable à un véhicule spatial pour permettre un pilotage de celui-ci en lacet ou tangage,
la figure 3 est une vue schématique arrière d'un deuxième exemple d'agencement de plusieurs tuyères bidimensionnelles selon l'invention, applicable à un véhicule spatial pour permettre un pilotage de celui-ci en lacet ou tangage,
la figure 4 est une vue en élévation et demi-coupe axiale d'un premier mode de réalisation d'une tuyère bidimensionnelle selon l'invention équipée d'un volet pivotant,
la figure 5 est une vue en perspective de la tuyère de la figure 4,
la figure 6 est une vue en élévation et demi-coupe axiale d'un deuxième mode de réalisation d'une tuyère bidimensionnelle selon l'invention équipée d'un volet pivotant, et
la figure 7 est une vue en perspective de la tuyère de la figure 6.

### Description détaillée de modes particuliers de réalisation

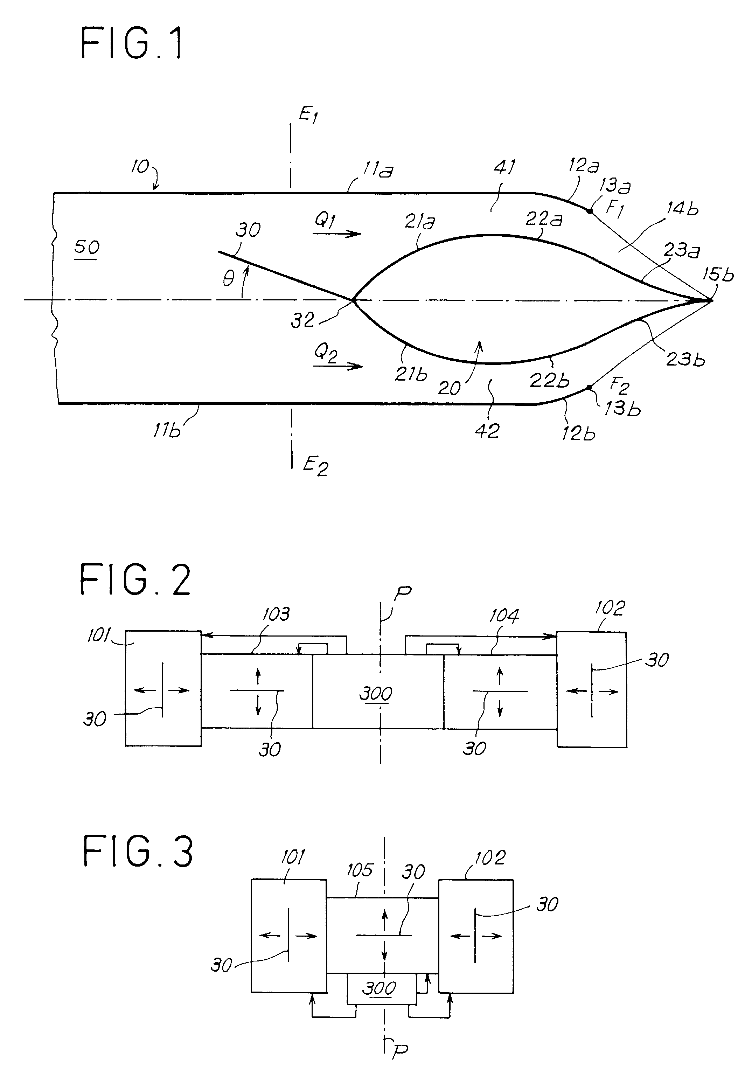

La figure 1 montre le principe d'une tuyère bidimensionnelle 10 à détente-déflexion conforme à l'invention. La tuyère 10 présente une section essentiellement rectangulaire dans un plan perpendiculaire à son axe longitudinal et comprend un corps central 20 qui est placé en aval de la chambre de combustion 50, de manière à définir entre le corps central 20 et des panneaux horizontaux supérieur 11a et inférieur 11b des canaux supérieur 41 et inférieur 42 de circulation de gaz chauds issus de la chambre de combustion 50. Le corps central 20 contribue ainsi à définir deux tuyères élémentaires comprenant chacune une partie convergente définie entre l'un des panneaux supérieur 11a et inférieur 11b et l'une des faces frontales convexes supérieure 21a et inférieure 21b du corps central 20, un col 22a, 22b et une partie divergente de détente des gaz définie entre la partie aval 12a, 12b de l'un des panneaux supérieur 11a et inférieur 11b et l'une des faces arrière légèrement convexes supérieure 23a et inférieure 23b du corps central 20, qui se terminent en forme de pointe.

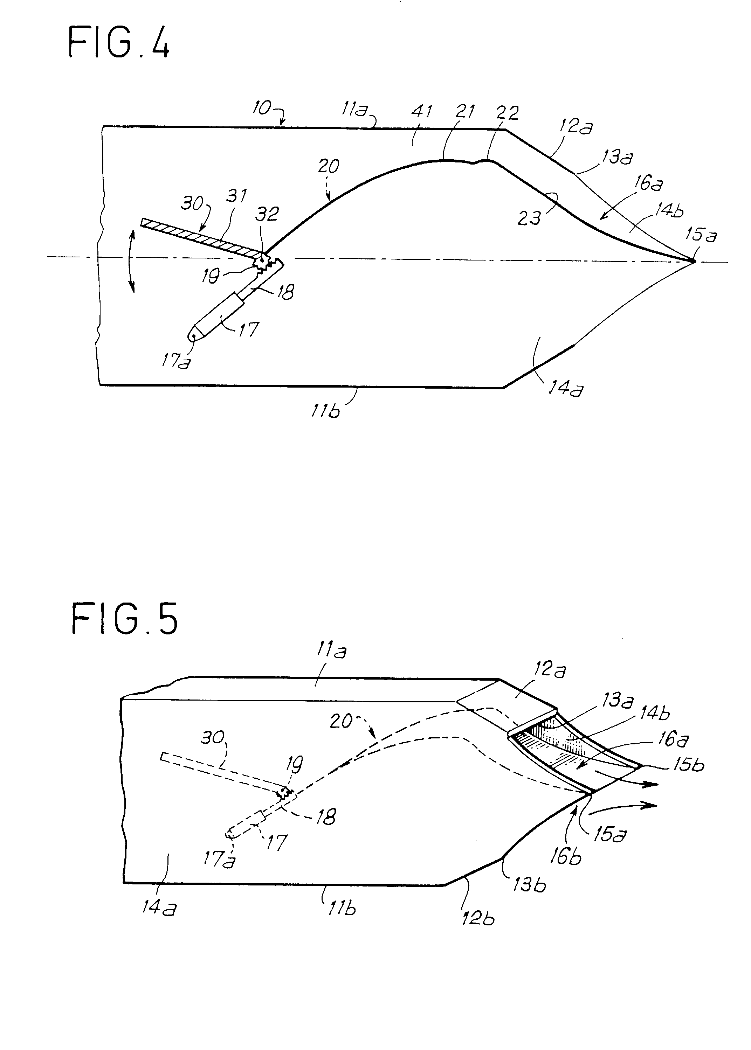

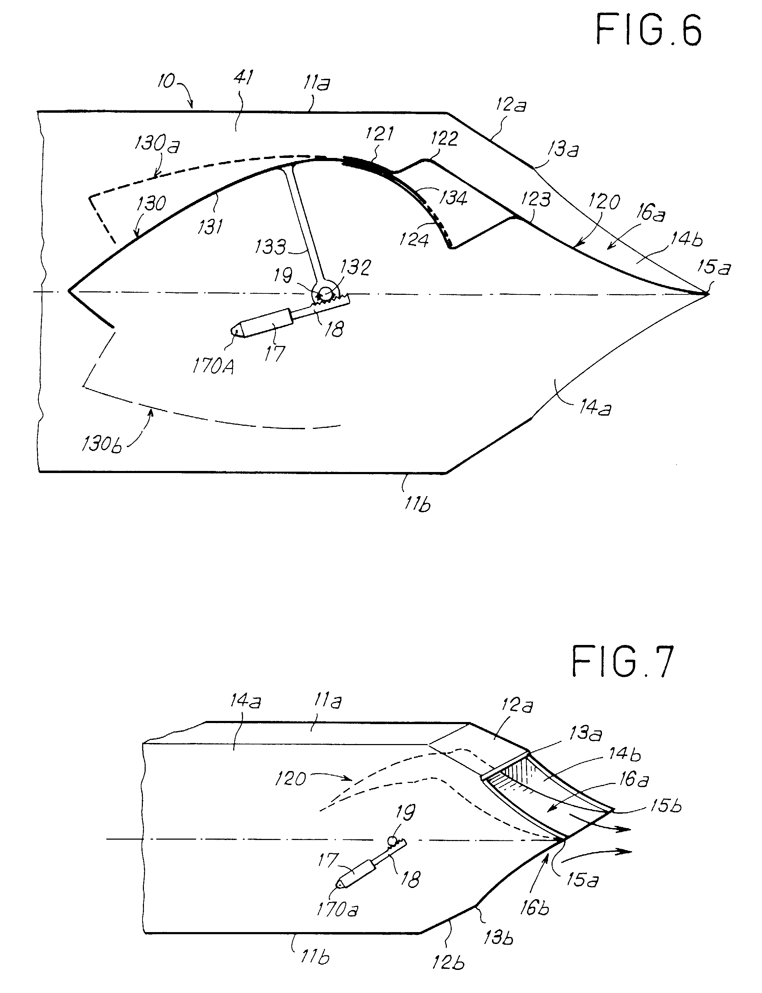

Chacun des panneaux supérieur 11a et inférieur 11b présente une partie aval 12a, 12b qui est recourbée vers l'intérieur de la tuyère et se termine par une arête horizontale 13a, 13b qui constitue un foyer F₁ respectivement F₂ pour chacune des tuyères élémentaires. Les gaz détendus subissent une déflexion vers l'extérieur en aval des foyers F₁ et F₂. Des panneaux longitudinaux verticaux 14a, 14b ferment la tuyère bidimensionnelle 10 sur ses deux côtés latéraux et se terminent par une pointe 15a, 15b (figures 5 et 7) au voisinage de la pointe aval du corps central 20.

Dans le cas d'une tuyère bidimensionnelle du type représenté sur la figure 1, c'est-à-dire comportant un corps central 20 placé de façon symétrique entre les panneaux supérieur et inférieur 11a, 11b, et en l'absence d'organe supplémentaire, tel que le panneau 30 qui sera décrit plus loin, les écoulements de gaz Q₁ et Q₂ dans les canaux supérieur et inférieur 41, 42 des tuyères élémentaires sont identiques et la poussée résultante est dirigée selon l'axe de la tuyère 10, qui est elle-même prévue pour être montée selon l'axe d'un véhicule spatial. Les composantes de portance de chacune des tuyères élémentaires sont alors opposées.

Conformément à l'invention, un organe formant volet 30 est monté en amont du corps central 20 de manière à pouvoir pivoter autour d'un axe 32 perpendiculaire aux panneaux latéraux fixes 14a, 14b. Dans le cas où le volet est disposé parallèlement à l'axe du moteur (angle θ nul), les écoulements Q₁ et Q₂ dans les canaux 41 et 42 restent identiques et la poussée résultante reste donc dirigée selon l'axe de la tuyère.

En revanche, lorsque le volet 30 pivote d'un angle θ non nul autour de l'axe 32, par exemple vers le haut comme représenté sur la figure 1, il se produit une différence entre les débits massiques des écoulements Q₁ et Q₂ la section de passage de l'un des canaux 41, 42 (le canal 41 dans le cas de la position de la figure 1) étant obturée partiellement en amont des cols 22a, 22b des tuyères élémentaires. Les composantes de portance des tuyères élémentaires sont alors modifiées, ce qui permet d'orienter sélectivement la poussée du véhicule spatial équipé d'une tuyère bidimensionnelle selon l'invention. Pour chaque tuyère élémentaire, la portance varie comme le débit, en valeur absolue, dans le canal correspondant 41 respectivement 42. La valeur initiale de la portance, lorsque le volet 30 est en position neutre, est donnée par la position du point foyer F₁ respectivement F₂. Dans ce qui précède, on a utilisé les qualificatifs "horizontal" ou "vertical" pour désigner les positions relatives de certains éléments de la tuyère de la figure 1. Ces termes ne sont pas limitatifs et sont utilisés pour faciliter la compréhension en référence à la figure 1. La tuyère 10 peut en effet fonctionner de la même manière en subissant par exemple une rotation de 90° autour de son axe longitudinal.

Les figures 2 et 3 montrent divers agencements possibles pour des ensembles de tuyères bidimensionnelles selon l'invention destinés à équiper des véhicules spatiaux. Les figures 2 et 3 correspondent à des sections schématiques qui seraient prises selon le plan E₁-E₂ de la figure 1.

L'utilisation de plusieurs tuyères à poussée orientable selon l'invention permet, en fonction de la disposition de ces tuyères, de piloter en lacet, ou en tangage ou en lacet et tangage le véhicule spatial équipé d'un jeu de telles tuyères.

Dans le cas de la figure 2, deux premières tuyères 101, 102 selon l'invention comprenant chacune un volet pivotant 30 dont l'axe de pivotement est vertical sont disposées de façon symétrique de part et d'autre d'un plan axial médian vertical P du véhicule spatial. Deux autres tuyères 103, 104 selon l'invention comprenant chacune un volet pivotant 30 dont l'axe de pivotement est horizontal sont disposées également de façon symétrique de part et d'autre du plan axial médian vertical P.

La commande des mouvements de pivotement des volets 30 des tuyères 101 à 104 est effectuée à partir d'un dispositif de commande centralisée 300 placé dans le véhicule spatial, qui est représenté de façon symbolique sur la figure 2.

En fonction de l'action exercée à partir du dispositif de commande centralisée 300 sur les différents volets 30 des différentes tuyères 101 à 104 et donc en fonction de l'orientation de la poussée de chaque tuyère 101 à 104, il est possible de piloter en lacet, tangage ou roulis le véhicule spatial équipé des deux paires de tuyères 101, 102 et 103, 104.

La figure 3 montre un autre agencement possible, plus compact, de tuyères selon l'invention placées dans un véhicule spatial de manière à permettre un pilotage en lacet et tangage.

Dans le cas de la figure 3, on dispose, comme dans le mode de réalisation de la figure 2, deux tuyères 101, 102 selon l'invention munies chacune d'un volet 30 pivotant autour d'un axe vertical, et disposées symétriquement par rapport à un plan axial médian vertical P du véhicule spatial. Une autre tuyère 105 selon l'invention munie d'un volet 30 pivotant autour d'un axe horizontal est intercalée entre les tuyères 101, 102 et présente un plan de symétrie axial vertical qui est confondu avec le plan axial médian vertical P du véhicule spatial. La commande des mouvements de pivotement des volets 30 des tuyères 101, 102, 105 est effectuée à partir d'un dispositif de commande centralisée 300 placé dans le véhicule spatial et représenté de façon symbolique sur la figure 3. Avec seulement trois tuyères selon l'invention et de façon compacte, il est possible d'assurer un pilotage d'un véhicule spatial à la fois en lacet, tangage et roulis.

On notera que, lorsqu'un volet 30 d'une tuyère 10 selon l'invention est en position neutre, le débit total dans la tuyère 10 à travers les deux cols 22a, 22b est déterminé par la pression dans la chambre de combustion 50 et la section de passage au niveau des cols 22a, 22b.

Lorsque le volet 30 pivote par exemple pour réduire la section de passage du canal 41, le débit Q₁ dans le canal 41 va diminuer, tandis que le débit Q₂ dans le canal 42 dont la section n'est pas réduite reste inchangé. Le débit total dépend donc en partie de la position du volet 30.

Un véhicule spatial pourrait être équipé par exemple des seules deux tuyères 101 et 105 de la figure 3 qui sont disposées de façon orthogonale l'une à l'autre et permettent donc d'orienter la poussée selon deux directions. Un tel agencement n'est toutefois pas symétrique par rapport au véhicule spatial, de sorte que la disposition de la figure 3 à trois tuyères 101, 102, 105 ou celle de la figure 2 à quatre tuyères 101 à 104 sont préférables.

On décrira maintenant en référence aux figures 4 et 5 un mode particulier de réalisation dans lequel le volet pivotant 30 est constitué par une plaque 31 essentiellement plane. De façon plus particulière, la plaque 31 est montée pivotante autour d'un axe 32 situé dans le plan de symétrie de la tuyère 10 qui est parallèle aux panneaux principaux 11a, 11b, au voisinage de l'extrémité amont du corps central 20. Le corps central 20 présente une première partie amont convexe 21 définissant la partie convergente du canal 41 constituant une tuyère élémentaire, une deuxième partie légèrement en saillie définissant le col 22 et une troisième partie aval 23 légèrement concave qui se termine par une pointe 15a.

On a représenté sur les figures 4 et 5 un exemple de moyens pouvant assurer le pivotement du volet 30. Les moyens comprennent deux vérins 17 (dont un seul est visible sur les dessins) disposés latéralement de part et d'autre de la tuyère 10. Le corps de chaque vérin 17 est fixé en un point tel que 17A sur l'un des panneaux latéraux fixes 14a, 14b. L'organe d'actionnement de chaque vérin agit par l'intermédiaire d'un système à crémaillère 18 sur une roue dentée 19 qui est solidaire du volet 30 et est centrée sur l'axe de pivotement 32. D'autres moyens d'actionnement peuvent naturellement être utilisés à la place des vérins 17.

La vue en perspective de la figure 5 permet de mieux voir l'arête 13a définissant le foyer de la tuyère élémentaire supérieure, ainsi que l'ouverture 16a formée en aval de l'arête 13a et par laquelle le flux de gaz de combustion peut se détendre vers l'extérieur. Une ouverture symétrique 16b est formée au niveau de la tuyère élémentaire inférieure.

Les figures 6 et 7 montrent un autre mode de réalisation d'une tuyère selon l'invention. Selon ce second mode de réalisation, le volet pivotant 130 est réalisé non par une plaque essentiellement plane comme dans le cas du mode de réalisation des figures 4 et 5, mais par une plaque incurvée en forme d'ogive 131 qui constitue elle-même la partie amont convexe du corps central 120. Le volet 130 comprend au moins un bras 133 pivotant autour d'un axe 132 situé dans le plan de symétrie de la tuyère 10 qui est parallèle aux panneaux principaux 11a, 11b au voisinage ou très légèrement en amont de la partie fixe du corps central 120 qui définit un col 122 pour chaque tuyère élémentaire.

De façon plus particulière, la plaque incurvée 131 en forme d'ogive peut comprendre une partie aval 131 arquée qui coulisse dans une glissière constituée par deux plaques incurvées 121, 124 situées dans la partie fixe du corps central 120 au voisinage du col 122 d'une tuyère élémentaire. Le corps central 120 et le volet mobile 130, lorsque celui-ci est en position neutre (en traits continus sur la figure 6), peuvent être symétriques par rapport au plan axial horizontal de la tuyère passant par l'axe de pivotement 132 et la pointe arrière du corps central 120.

Sur la figure 6, on a également représenté en pointillé des positions possibles 130a et 130b pour le volet pivotant 130. La position 130a correspond à une diminution de la section du canal d'écoulement supérieur 41, la section du canal d'écoulement inférieur 42 restant inchangée. Au contraire, la position 130b correspond à une diminution de la section du canal d'écoulement inférieur 42, la section du canal d'écoulement supérieur 41 restant inchangée.

Comme dans le cas du mode de réalisation des figures 4 et 5, le volet pivotant peut être actionné au moyen de deux vérins 17 disposés de part et d'autre des panneaux latéraux verticaux 14a, 14b, le corps de chaque vérin 17 étant fixé en une zone telle que 170A sur le panneau correspondant, tel que le panneau 14a visible sur les figures 6 et 7. Comme dans le cas du mode de réalisation des figures 4 et 5, chaque vérin 17 peut agir par exemple par l'intermédiaire d'un système à crémaillère 18 sur une roue dentée 19 qui est centrée sur l'axe de pivotement 132 et solidaire du ou des bras 133 reliés à la partie 131 du volet 130 en forme d'ogive. On notera que, dans le cas du mode de réalisation des figures 6 et 7, l'axe de pivotement 132 et donc les vérins 17 sont situés dans une zone qui est sensiblement au niveau du col 122 de chaque tuyère élémentaire, ou légèrement en amont tandis que, dans le cas du mode de réalisation des figures 4 et 5, l'axe de pivotement 32 et donc les vérins 17 sont situés tout à fait à l'amont du corps central 20, c'est-à-dire beaucoup plus en amont par rapport au col 22 de chaque tuyère élémentaire.

## Revendications

1. Tuyère à détente-déflexion symétrique plane bidimensionnelle à poussée orientable, comprenant des premier et second panneaux latéraux parallèles fixes (14a, 14b) orientés longitudinalement et dont la partie arrière se termine en forme de pointe (15a, 15b), des premier et second panneaux principaux fixes (11a, 11b) et un corps central (20 ; 120) définissant avec chacun des premier et second panneaux principaux fixes (11a, 11b) des premier et second canaux d'écoulement (41, 42) de gaz chauds issus d'une chambre de combustion (50), des premier et second cols (22 ; 122) étant formés entre le corps central (20 ; 120) et les premier et second panneaux principaux fixes (11a, 11b), le corps central (20 ; 120) présentant en aval des premier et second cols (22 ; 122) une partie convergente se terminant au voisinage desdites pointes (15a, 15b) des premier et second panneaux latéraux (14a, 14b) et les premier et second panneaux principaux (11a, 11b) présentant également chacun en aval des premier et second cols (22 ; 122), des parties amère qui convergent vers le corps central (20 ; 120) et sont interrompues par des arêtes (13a, 13b) constituant des premier et second foyers (F₁, F₂) situés en regard de la partie convergente du corps central (20 ; 120) et en amont desdites pointes (15a, 15b) des premier et second panneaux latéraux (14a, 14b), les gaz brûlés dans la chambre de combustion (50) et s'écoulant à travers les premier et second canaux d'écoulement (41, 42) étant soumis à une détente et à une déflexion par le corps central en aval des arêtes (13a, 13b) constituant les premier et second foyers (F₁, F₂), caractérisée en ce qu'elle comprend en outre un organe formant volet (30 ; 130) monté en amont du corps central (20 ; 120) de manière à pouvoir pivoter autour d'un axe perpendiculaire auxdits premier et second panneaux latéraux fixes (14a, 14b) en faisant varier ainsi en sens opposés les sections de passage des premier et second canaux d'écoulement (41, 42) en amont des premier et second cols (22 ; 122), de telle sorte que les débits massiques des écoulements des deux canaux d'écoulement (41, 42) situés de part et d'autre du corps central (20 ; 120) peuvent être sélectivement modifiés cn sens inverse pour créer des composantes de portance différentes.

2. Tuyère selon la revendication 1, caractérisée en ce que le volet (30) présente la forme d'une plaque essentiellement plane.

3. Tuyère selon la revendication 2, caractérisée en ce que le volet (30) est monté pivotant autour d'un axe (32) situé dans le plan de symétrie de la tuyère (10) qui est parallèle aux panneaux principaux (11a, 11b), au voisinage de l'extrémité amont du corps central (20).

4. Tuyère selon la revendication 1, caractérisée en ce que le volet (130) est constitué par un corps en forme d'ogive qui constitue la partie amont du corps central (130) et comprend au moins un bras (133) pivotant autour d'un axe (132) situé dans le plan de symétrie de la tuyère (10) qui est paralllèle aux panneaux principaux (11a, 11b), au voisinage ou très légèrement en amont de la partie fixe du corps central (130) qui définit les premier et second cols (122).

5. Tuyère selon la revendication 4, caractérisée en ce que le volet (130) en forme d'ogive comprend une partie aval constituée par au moins une plaque incurvée (134) qui coulisse dans une glissière constituée par deux plaques incurvées (121, 124) situées dans la partie fixe du corps central (120) au voisinage d'au moins l'un des premier et second cols (122).

6. Tuyère selon l'une quelconque des revendications 2 à 5, caractérisée en ce qu'elle compend des moyens de commande de pivotement du volet (30 ; 130) qui comprennent une paire de vérins (17) dont le corps est fixé sur l'un des premier et second panneaux latéraux fixes (14a, 14b) et l'organe d'actionnement agit par l'intermédiaire d'un système à crémaillère (18) sur une roue dentée (19) solidaire dudit volet (30 ; 130) qui est centrée sur ledit axe de pivotement (32 ; 132).

7. Véhicule spatial, caractérisé en ce qu'il comprend au moins une première paire (101, 102) de tuyères à détente-déflexion symétriques planes bidimensionnelles à poussée orientable selon l'une quelconque des revendications 1 à 6, comprenant chacune un volet (30 ; 130) pivotant autour d'un axe vertical, et au moins une deuxième paire (103, 104) de tuyères à détente-déflexion symétriques planes bidimensionnelles à poussée orientable selon l'une quelconque des revendications 1 à 6, comprenant chacune un volet (30 ; 130) pivotant autour d'un axe horizontal, en ce que chacune des première et deuxième paires (101, 102 ; 103, 104) de tuyères est disposée symétriquement par rapport à un plan axial médian vertical du véhicule spatial, et en ce que des moyens de commande (300) sont prévus de manière à piloter le véhicule spatial en lacet, roulis et tangage par action sur la position angulaire des volets (30 ; 130) des différentes tuyères (101, 102, 103, 104).

8. Véhicule spatial, caractérisé en ce qu'il comprend des première et deuxième tuyères (101, 102) à détente-déflexion symétriques planes bidimensionnelles à poussée orientable selon l'une quelconque des revendications 1 à 6, qui comprennent chacune un volet (30 ; 130) pivotant autour d'un axe vertical, et sont disposées symétriquement par rapport à un plan axial médian vertical du véhicule spatial, et une tuyère supplémentaire (105) à détente-déflexion symétrique plane bidimensionnelle à poussée orientable selon l'une quelconque des revendications 1 à 6, qui comprend un volet (30 ; 130) pivotant autour d'un axe horizontal et se trouve disposée entre lesdites première et deuxième tuyères (101, 102) également de façon symétrique par rapport audit plan axial médian vertical du véhicule spatial, et en ce que des moyens de commande (300) sont prévus de manière à piloter le véhicule spatial en lacet, roulis et tangage par action sur la position angulaire des volets (30 ; 130) des différentes tuyères (101, 102, 105).

## Patentansprüche

1. Symmetrische flache zweidimensionale Expansions-Deflexions-Düse mit einstellbarem Schub, die folgendes aufweist:
- erste und zweite parallele feste Seitenplatten (14a, 14b), die längs ausgerichtet sind und deren hinterer Teil in Form einer Spitze (15a, 15b) endet,
- erste und zweite feste Hauptplatten (11a, 11b) und einen zentralen Körper (20; 120), der mit jeder der ersten und zweiten festen Hauptplatten (11a, 11b) erste und zweite Strömungskanäle (41, 42) von heißen, aus einer Brennkammer (50) kommenden Gasen festlegt,
- erste und zweite Hälse (22; 122), die zwischen dem zentralen Körper (20; 120) und den ersten und zweiten festen Hauptplatten (11a, 11b) ausgebildet werden,
wobei der zentrale Körper (20; 120) stromabwärts des ersten und zweiten Halses (22; 122) einen konvergenten Abschnitt aufweist, der in der Nähe der Spitzen (15a, 15b) der ersten und zweiten Seitenplatten (14a, 14b) endet, und wobei die ersten und zweiten Hauptplatten (11a, 11b) ebenfalls jeweils stromabwärts der ersten und zweiten Hälse (22; 122) hintere Abschnitte aufweisen, die zum zentralen Körper (20; 120) hin konvergieren und durch Kanten (13a, 13b) unterbrochen sind, welche erste und zweite Brennpunkte (F₁, F₂) bilden, die dem konvergierenden Abschnitt des zentralen Körpers (20; 120) zugewandt und stromaufwärts der Spitzen (15a, 15b) der ersten und zweiten Seitenplatten (14a, 14b) liegen, und wobei die in der Brennkammer (50) verbrannten Gase, die über die ersten und zweiten Strömungskanäle (41, 42) ausströmen, eine Expansion und eine Deflexion durch den zentralen Körper stromabwärts der die ersten und zweiten Brennpunkte (F₁, F₂) bildenden Kanten (13a, 13b) erfahren, dadurch gekennzeichnet, daß sie darüber hinaus eine Klappe (30; 130) umfaßt, die stromaufwärts des zentralen Körpers (20; 120) derart angebracht ist, daß sie um eine zu den ersten und zweiten festen Seitenplatten (14a, 14b) senkrechte Achse verschwenken kann und so die Durchlaßquerschnitte der ersten und zweiten Strömungskanäle (41, 42) stromaufwärts der ersten und zweiten Hälse (22; 122) gegenläufig zueinander verändert, so daß die Mengendurchflüsse der Strömungen der auf beiden Seiten des zentralen Körpers (20; 120) gelegenen beiden Strömungskanäle (41, 42) selektiv gegenläufig zueinander verändert werden können, um unterschiedliche Auftriebskomponenten zu schaffen.

2. Düse nach Anspruch 1, dadurch gekennzeichnet, daß die Klappe (30) die Form einer im wesentlichen ebenen Platte aufweist.

3. Düse nach Anspruch 2, dadurch gekennzeichnet, daß die Klappe (30) um eine Achse (32) verschwenkbar befestigt ist, die in der zu den Hauptplatten (11a, 11b) parallelen Symmetrieebene der Düse (10) in der Nähe des stromaufwärtigen Endes des zentralen Körpers (20) verläuft.

4. Düse nach Anspruch 1, dadurch gekennzeichnet, daß die Klappe (130) durch einen spitzkegelförmigen Körper gebildet ist, der den stromaufwärtigen Abschnitt des zentralen Körpers (130) bildet und mindestens einen Arm (133) umfaßt, der um eine Achse (132) verschwenkt, die in der zu den Hauptplatten (11a, 11b) parallelen Symmetrieebene der Düse (10) in der Nähe oder geringfügig stromaufwärts des festen Abschnitts des zentralen Körpers (130) verläuft, welcher die ersten und zweiten Hälse (122) festlegt.

5. Düse nach Anspruch 4, dadurch gekennzeichnet, daß die spitzkegelförmige Klappe (130) einen stromabwärtigen Abschnitt umfaßt, der durch mindestens eine gebogene Platte (134) gebildet wird, die in einer Gleitschiene gleitet, wobei die Gleitschiene aus zwei gebogenen Platten (121, 124) besteht, welche im festen Abschnitt des zentralen Körpers (120) in der Nähe von mindestens einem der ersten und zweiten Hälse (122) liegen.

6. Düse nach einem der Ansprüche 2 bis 5, dadurch gekennzeichnet, daß sie Mittel zur Steuerung des Verschwenkens der Klappe (30; 130) aufweist, die ein Paar Zylinder (17) umfassen, deren Körper an den ersten oder zweiten festen Seitenplatten (14a, 14b) befestigt ist und deren Betätigungsorgan über ein Zahnstangensystem (18) auf ein fest mit der Klappe (30; 130) verbundenes Zahnrad (19) wirkt, das auf der Schwenkachse (32; 132) zentriert ist.

7. Raumfahrzeug, dadurch gekennzeichnet, daß es mindestens ein erstes Paar symmetrische flache zweidimensionale Expansions-Deflexions-Düsen (101, 102) mit einstellbarem Schub nach einem der Ansprüche 1 bis 6 umfaßt, die jeweils eine um eine vertikale Achse verschwenkbare Klappe (30; 130) aufweisen, und mindestens ein zweites Paar symmetrische flache zweidimensionale Expansions-Deflexions-Düsen (103, 104) mit einstellbarem Schub nach einem der Ansprüche 1 bis 6 aufweist, die jeweils eine um eine horizontale Achse verschwenkbare Klappe (30; 130) aufweisen, dadurch, daß jedes der ersten und zweiten Düsenpaare (101, 102; 103, 104) symmetrisch bezüglich einer Ebene des Raumfahrzeugs angeordnet ist, in der die senkrechte Mittelachse verläuft, und dadurch, daß Mittel zur Steuerung (300) vorgesehen sind, um das Raumfahrzeug durch Einwirkung auf die Winkelstellung der Klappen (30; 130) der verschiedenen Düsen (101, 102, 103, 104) gierend, rollend und nickend zu führen.

8. Raumfahrzeug, dadurch gekennzeichnet, daß es erste und zweite symmetrische flache zweidimensionale Expansions-Deflexions-Düsen (101, 102) mit einstellbarem Schub nach einem der Ansprüche 1 bis 6 aufweist, die jeweils eine um eine vertikale Achse verschwenkbare Klappe (30; 130) umfassen und symmetrisch bezüglich einer Ebene des Raumfahrzeugs angeordnet sind, in der die senkrechte Mittelachse verläuft, und eine zusätzliche symmetrische flache zweidimensionale Expansions-Deflexions-Düse (105) mit einstellbarem Schub nach einem der Ansprüche 1 bis 6 aufweist, die eine um eine horizontale Achse verschwenkbare Klappe (30; 130) umfaßt und zwischen den ersten und zweiten Düsen (101, 102) ebenfalls symmetrisch bezüglich der Ebene des Raumfahrzeugs angeordnet ist, in der die senkrechte Mittelachse verläuft, und dadurch, daß Mittel zur Steuerung (300) vorgesehen sind, um das Raumfahrzeug durch Einwirkung auf die Winkelstellung der Klappen (30; 130) der verschiedenen Düsen (101, 102, 105) gierend, rollend und nickend zu führen.

## Claims

1. Vectorable-thrust bidimensional planar symmetric expansion/deflection nozzle comprising a first and a second stationary parallel lateral panel (14a, 14b) directed longitudinally and the rear part of which ends in the shape of a point (15a, 15b), a first and a second stationary main panel (11a, 11b) and a central body (20; 120) which together with each of the first and second stationary main panels (11a, 11b) defines first and second flow ducts (41, 42) for hot gases coming from a combustion chamber (50), a first and a second throat (22; 122) being formed between the central body (20; 120) and the first and second stationary main panels (11a, 11b), the central body (20; 120) having, downstream of the first and second throats (22; 122), a convergent part ending near the said points (15a, 15b) of the first and second lateral panels (14a, 14b), and the first and second main panels (11a, 11b) also each having, downstream of the first and second throats (22; 122), rear parts which converge towards the central body (20; 120) and are interrupted by edges (13a, 13b) constituting a first and a second centre of thrust (F₁, F₂) situated facing the convergent part of the central body (20; 120) and upstream of the said points (15a, 15b) of the first and second lateral panels (14a, 14b), the gases burnt in the combustion chamber (50) and flowing through the first and second flow ducts (41, 42) being subject to an expansion and a deflection by the central body downstream of the edges (13a, 13b) constituting the first and second centres of thrust (F₁, F₂), the nozzle being characterized in that it further comprises a member forming a flap (30; 130) mounted upstream of the central body (20; 120) in such a way that it can pivot about an axis perpendicular to the said first and second stationary lateral panels (14a, 14b), thus causing the passage cross-sections of the first and second flow ducts (41, 42) upstream of the first and second throats (22; 122) to vary in opposite directions in such a way that the mass flow rates through the two flow ducts (41, 42) on either side of the central body (20; 120) can be modified selectively in opposite directions in order to create different components of lift.

2. Nozzle according to Claim 1, characterized in that the flap (30) has the shape of an essentially planar plate.

3. Nozzle according to Claim 2, characterized in that the flap (30) is mounted so that it can pivot about an axis (32) lying in the plane of symmetry of the nozzle (10), which plane is parallel to the main panels (11a, 11b) near the upstream end of the central body (20).

4. Nozzle according to Claim 1, characterized in that the flap (130) consists of an ogive-shaped body which constitutes the upstream part of the central body (130) and comprises at least one arm (133) that pivots about an axis (132) lying in the plane of symmetry of the nozzle (10), which plane is parallel to the main panels (11a, 11b) near or very slightly upstream of the stationary part of the central body (13) which defines the first and second throats (122).

5. Nozzle according to Claim 4, characterized in that the flap (130) in the shape of an ogive comprises a downstream part which consists of at least one curved plate (134) which slides in a slideway consisting of two curved plates (121, 124) situated in the stationary part of the central body (120) near at least one of the first and second throats (122).

6. Nozzle according to any one of Claims 2 to 5, characterized in that it comprises means of controlling the pivoting of the flap (30; 130), which means comprise a pair of jacks (17), the bodies of which are fixed to one of the first and second stationary lateral panels (14a, 14b), and the operating member of which acts via a system comprising a rack (18) on a toothed wheel (19) integral with the said flap (30; 130) and which is centred on the said axis of pivoting (32; 132).

7. Space vehicle, characterized in that it comprises at least one first pair (101, 102) of vectorable-thrust bidimensional planar symmetric expansion/deflection nozzles according to any one of Claims 1 to 6, each comprising a flap (30; 130) pivoting about a vertical axis and at least one second pair (103, 104) of vectorable-thrust bidimensional planar symmetric expansion/deflection nozzles according to any one of Claims 1 to 6, each comprising a flap (30; 130) pivoting about a horizontal axis, in that each of the first and second pairs (101, 102; 103, 104) of nozzles is arranged symmetrically with respect to a vertical axial mid-plane of the space vehicle, and in that control means (300) are provided so that the space vehicle can be controlled in terms of yaw, roll and pitch by action on the angular position of the flaps (30; 130) of the various nozzles (101, 102, 103, 104).

8. Space vehicle, characterized in that it comprises first and second vectorable-thrust bidimensional planar symmetric expansion/deflection nozzles (101, 102) according to any one of Claims 1 to 6, each of which comprises a flap (30; 130) pivoting about a vertical axis, and which nozzles are arranged symmetrically with respect to a vertical axial mid-plane of the space vehicle, and an additional vectorable-thrust bidimensional planar symmetric expansion/deflection nozzle (105) according to any one of Claims 1 to 6, which comprises a flap (30; 130) pivoting about a horizontal axis and is arranged between the said first and second nozzles (101, 102), also symmetrically with respect to the said vertical axial mid-plane of the space vehicle, and in that control means (300) are provided so that the space vehicle can be controlled in terms of yaw, roll and pitch by action on the angular position of the flaps (30; 130) of the various nozzles (101, 102, 105).
